# EUROPÄISCHE PATENTSCHRIFT

(11) **EP 0 738 203 B1**
(45) Veröffentlichungstag und Bekanntmachung des Hinweises auf die Patenterteilung: **04.08.1999**
(21) Anmeldenummer: 95900622.2
(22) Anmeldetag: 12.11.1994
(51) Int. Cl.: B27N 7/00, B29C 63/04, B27D 5/00

(54) **VERFAHREN ZUR HERSTELLUNG VON BESCHICHTETEN TAFELELEMENTEN**
PROCESS FOR PRODUCING COATED PANEL UNITS
PROCEDE POUR LA FABRICATION D'ELEMENTS DE PANNEAUX REVETUS

(43) Veröffentlichungstag der Anmeldung: 23.10.1996
(73) Patentinhaber: Fendt, Hermann, 87745 Eppishausen-Haselbach (DE)
(72) Erfinder: Fendt, Hermann, 87745 Eppishausen-Haselbach (DE)
(74) Vertreter: Munk, Ludwig, Dipl.-Ing.
(86) Internationale Anmeldenummer: DE9401339
(87) Internationale Veröffentlichungsnummer: WO9614971

(56) Entgegenhaltungen:
- EP-A- 0 370 353
- EP-A- 0 389 400
- EP-A- 0 545 390
- DE-A- 3 037 233
- DE-A- 3 631 325

## Beschreibung

Die Erfindung betrifft ein Verfahren zur Herstellung von beschichteten, insbesondere furnierten, Tafelelementen, insbesondere Paneelen, mit wenigsten einer profilierten, vorzugsweise eine abgerundete Längskante aufweisenden Längsseite.

Bei der Herstellung von Paneelen mit abgerundeter Längskante etc. war bisher eine durchgehende Furnierung nicht möglich. Vielmehr war es erforderlich, eine sogenannte Kantenleiste anzusetzen, die furniert sein oder in Massivholz ausgeführt sein konnte. In jedem Falle ergab sich ein sichtbarer Stoß. Außerdem bestand die Gefahr sichtbarer Farbunterschiede. Ein weiterer, ganz besonderer Nachteil ist jedoch in dem hohen Herstellungsaufwand zu sehen.

Hiervon ausgehend ist es daher die Aufgabe der vorliegenden Erfindung, ein Verfahren eingangs erwähnter Art zu schaffen, das unter Vermeidung angesetzter Kantenleisten die Erzeugung einer ununterbrochenen Furnieroberfläche ermöglicht.

Diese Aufgabe wird durch die kennzeichnenden Maßnahmen des Anspruchs 1 gelöst.

Die erfindungsgemäßen Maßnahmen ergeben eine sich einstückig über die Seitenflächen und die sonstige Oberfläche erstreckende Kaschierung bzw. Furnierung, wodurch sichtbare Stöße bzw. Farbunterschiede entfallen. Mit Hilfe der erfindungsgemaßen Maßnahmen wird erreicht, daß trotz Verwendung eines durchgehenden Furnierblatts etc. der Kaschier- oder Furniervorgang mehrstufig gestaltet werden kann, indem zunächst die Elementoberseite und erst anschließend die Seitenflanken furniert werden. Dies ermöglicht in vorteilhafter Weise die Verwendung herkömmlicher Durchlaufpressen, was eine äußerst preiswerte Herstellung gewährleistet. Dadurch, daß beim Durchtrennen der Randstege eine furnierseitige Versteifungsrippe stehen bleibt, wird im Zwischenstadium zwischen den einzelnen Arbeitsschritten eine zuverlässige Stabilisierung des Furnierblatts etc. gewährleistet, was auch mit einfachen Mitteln eine exakte und genaue Arbeitsweise sicher- stellt.

Vorteilhafte Weiterbildungen und zweckmäßige Ausgestaltungen der übegeordneten Maßnahmen sind in den Unteransprüchen angegeben. So kann die sichtseitige, lichte Weite der Randnut bzw. -nuten zumindest der Abwicklungslänge der jeweils zugeordneten Flanke des fertigen Elements entsprechen. Hierdruch wird sichergestellt, daß die beim Durchtrennen der Randstege jeweils stehenbleibende Versteifungsrippe beim Anpressen der Beschichtung an die Seitenflanke die Rohlingsunterseite untergreift, so daß die gesamte Seitenflanke zuverlässig furniert etc. wird.

Eine weitere zweckmäßige Maßnahme kann darin bestehen, daß bei für Nut- und Federverbindungen bestimmten Elementen in Form von Paneelen die hierfür vorgesehen Nuten erst nach der Furnierung etc. eingeschnitten werden. Hierdurch wird sicher gestellt, daß die Seitenflanken nicht nur bis zur Nut sondern auch im Bereich der unteren Nutwange furniert etc. sind. Gleichzeitig werden exakte Kanten erreicht.

Eine weitere, zweckmäßige Fortbildung der übergeordneten Maßnahmen kann darin bestehen, daß der Rohling aus miteinander verleimten Leisten besteht, die so angeordnet sind, daß sich über der ganzen Elementbreite im wesentlichen stehend verlaufende Jahresringe ergeben. Dieser Jahresringverlauf stellt sicher, daß sich die Oberflächenstruktur des Rohlings auch bei Verzicht auf ein Sperrfurnier nicht auf dem Sichtfurnier etc. abzeichnet. Es ist daher in vorteilhafter Weise eine einschichtige Kaschierung bzw. Furnierung etc. möglich.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung erkennbar.

Nachstehend wird ein bevorzugtes Ausführungsbeispiel anhand der Zeichnung näher erläutert. Hierbei zeigen:

**Figuren 1 bis 7**
aufeinanderfolgende Verfahrensschritte anhand des Produktionsfortgangs bei der Herstellung eines erfindungsgemäßen Paneels.

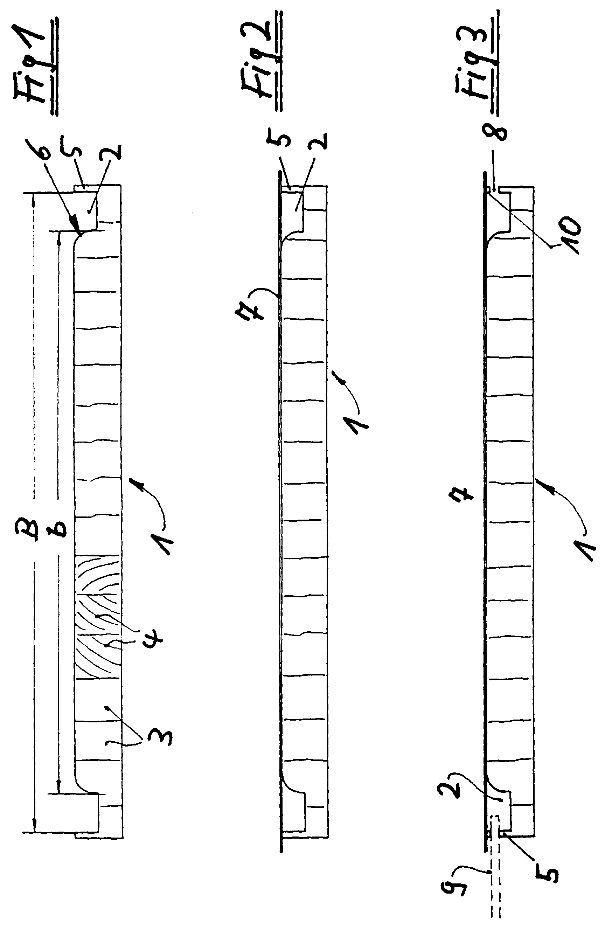

Die Figur 1 zeigt einen zum Furnieren bereits vorbereiteten Paneelrohling 1. Dieser ist mit zwei entlang seiner seitlichen Kanten verlaufenden, zur oberen Sichtseite hin offenen Randnuten 2 versehen. Diese können von oben her mittels eines Formfrasers in das brettförmige, einen rechteckförmigen Querschnitt aufweisende Ausgangsstück eingefräst worden sein. Das brettförmige Ausgangsstück kann zweckmäßig aus seitlich miteinander verleimten Leisten 3 bestehen, die so angeordnet sind, daß sich über der ganzen Rohlingsbreite im wesentlichen stehend verlaufende Jahresringe ergeben, wie in Figur 1 bei 4 angedeutet ist. Dieser stehende Verlauf der Jahresringe 4 stellt sicher, daß auch bei Verzicht auf ein Sperrfunier die Oberflächenstruktur des Paneelrohlings 1 nicht auf dem direkt hierauf aufbringbaren Sichtfurnier abgezeichnet wird.

Nach außen sind die Randnuten 2 jeweils durch einen beim Einfräsen der Nuten stehen gelassenen Randsteg 5 begrenzt, dessen Höhe der Höhe des mittleren Nutzens des Rohlings 1 entspricht. Die innere Flanke der Randnuten 5 ist hier als radienförmige Abrundung 6 ausgebildet, entsprechend der gewünschten seitlichen Abrundung des fertigen Paneels, wie aus Figur 7 erkennbar ist. Die Breite B des Ausgangsstücks bzw. Rohlings 1 ist dementsprechend um die Fußbreite der Randnuten 2 und die Dicke der Randstege 5 größer als die Breite b des später als Furnierträger benötigten Nutzens des Rohlings 1.

Im Anschluß an die Herstellung der Randnuten 2 wird auf den so vorbereiteten Rohling 1, wie aus Figur 2 erkennbar ist, ein Furnierblatt 7 aufgeleimt und aufgepresst, das sich durchgehend über die von den Randnuten 2 begrenzte, mittlere Oberfläche des Nutzenstücks des Rohlings 1 sowie über die Oberseiten der Randstege 5 erstreckt. Zum Aufleimen des Furnierblatts 7 kann ein umweltfreundlicher Dispersionsleim Verwendung finden wie dies auch zum Verleimen der Leisten 3 der Fall sein kann. Das Furnierblatt 7 ist auf seiner ganzen Auflagefläche verleimt und haftet dementsprechend nicht nur auf der Oberfläche des mittleren Nutzenstücks, sondern auch auf den seitlichen Randstegen 5. Die Randnuten 2 werden vom aufgelegten Furnierblatt 7 abgedeckt.

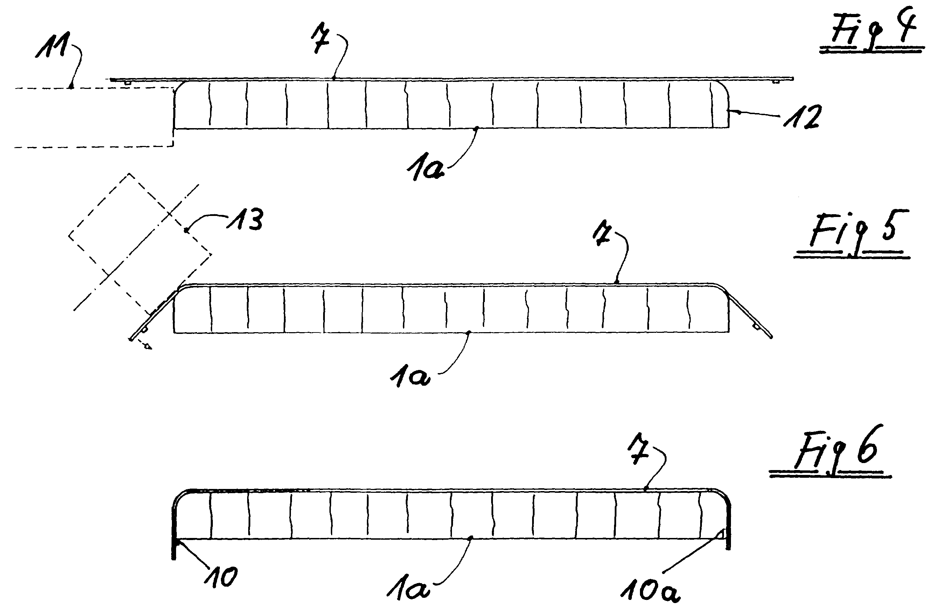

Anschließend werden, wie in Figur 3 bei 8 angedeutet ist, die Randstege 5 durchtrennt. Der hierzu erfoderliche Trennschnitt kann mittels eines von der Seite her eingreifenden Kreissägenblatts oder Scheibenfräsers durchgeführt werden, wie in Figur 3 bei 9 angedeutet ist. Der Trennschnitt 8 wird mit Abstand unterhalb des Furnierblatts 7 durchgeführt, so daß eine am Furnierblatt 7 befestigte Stabilisierungsrippe 10 stehen bleibt, welche den nun frei über das mittlere Nutzenstück auskragenden Randbereich des Furnierblatts 7 stabilisiert.

Anschließend wird der Paneelrohling, wie Figur 4 zeigt, durch seitliche Materialabnahme bis auf die Innenflanken der Randnuten 2, also bis auf Nutzenmaß abgearbeitet. Dabei wird praktisch der Überstand der Rohlingsbreite B über die Nutzenbreite b entfernt, so daß sich das gewünschte Nutzenstück 1a ergibt. Die seitliche Materialabnahme kann mittels eines seitlich angreifenden Scheibenfräsers 11 erfolgen, wie in Figur 4 angedeutet ist. Das von dieser seitlichen Materialabnahme nicht berührte Furnierblatt kragt mit seinem versteiften Randbereich über die seitlichen, eine abgerundete Längskante aufweisenden Flanken des Nutzenstücks 1a aus. Im vorliegenden Beispiel werden zur Durchtrennung der Randstege 5 und zum Abarbeiten des Rohlings bis auf Nutzenbreite 2 den Figuren 3 und 4 zugrundeliegende Arbeitsschritte durchgeführt. Es wäre natürlich auch eine Beschränkung auf den der Figur 4 zugrundeliegenden Frässchnitt denkbar, bei dem der zugeordnete Randsteg mit durchtrennt würde. Die vorherige Durchtrennung des Randstegs 5 stellt jedoch sicher, daß Instabilitäten des freigelegten Furnierblattrands zuverlässig unterbleiben.

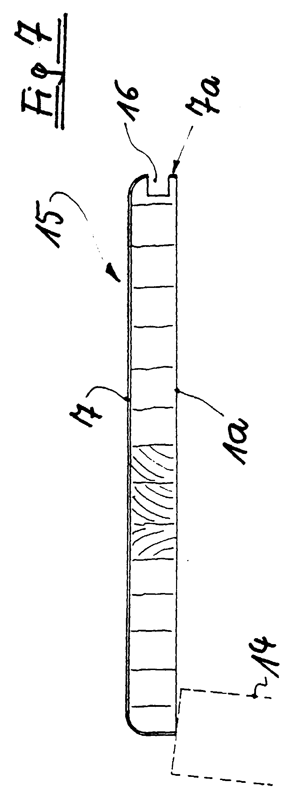

Die Unterseiten der über das Nutzenstück 1a seitlich auskragenden Randstreifen des Furnierblatts und/oder die abgerundeten Seitenflanken 12 des Nutzenstücks 1a werden anschließend beleimt. Hierzu kann wiederum ein umweltfreundlicher Dispersionsleim Verwendung finden. Anschließend werden die auskragenden Randstreifen des Furnierblatts 7 unter Verwendung herkömmlicher Durchlaufpressen an die Seitenflanken 12 angepresst, wie in Figur 5 durch eine Anpressrolle 13 angedeutet ist. Auch bei dem der Figur 2 zugrundeliegenden Furniervorgang können Durchlaufpressen herkömmlicher Bauart Verwendung finden. Zur Beschleunigung der Leimabbindung kann zweckmäig eine Beheizung, beispielsweise mittels einer Infrarotbestrahlung, erfolgen. Nach dem Anlegen der Randstreifen des Furnierblatts 7 an die Seitenflanken 12 des Nutzenstücks 1a ist dieses, wie die Figur 6 zeigt, auf seiner Oberseite und den hieran anschließenden, abgerundeten Seitenflanken mittels eines durchgehenden Furnierblatts 7 furniert.

Die furnierseitig festgelegten Verssteifungsrippen 10 sind so platziert, daß sie den Furniervorgang für die Seitenflanken 12 nicht behindern. Im dargestllten Beispiel untergreifen die Versteifungsrippen 10 des angelegten Furnierblatts 7 , wie Figur 6 links erkennen läßt, das Nutzenstück 1a. Dies wird dadurch erreicht, daß die lichte Weite der Randnuten im Bereich der Nutzenoberseite zumindest der Abwicklungslänge der zugeordneten Flanke des Nutzenstücks 1a bzw. des fertigen Paneels entspricht. Es wäre aber auch denkbar, die Versteifungsrippen 10 jeweils in eine zugeordnete Nut 10a des Nutzenstücks 1a eingreifen zu lassen, wie in Figur 6 rechts angedeutet ist. In diesem Fall wird zumindest um die Rippenbreite weniger Furnier verbraucht. Die Nut 10a, die hier zweckmäßig als zweiseitig offene, untere Randnut ausgebildet ist, kann im Zusammenhang mit dem der Figur 4 zugrundeliegenden Fräsvorgang hergestellt werden.

Anschließend werden die über die Unterseite des Nutzenstücks 1a vorstehenden Ränder des Furnierblatts 7 bündig mit der Unterseite des Nutzenstücks 1a abgeschnitten, wie in Figur 7 durch einen von unten angreifenden Scheibenfräser 14 angedeutet ist. Die Achse des Scheibenfräsers 14 ist, wie Figur 7 anschaulich zeigt, gegenüber der Paneeloberfläche leicht gekippt, so daß sich im Schnittbereich eine leichte Phase etwa im Bereich von sieben bis neuen Grad, hier acht Grad, ergibt. Dies bewerkstelligt einen zuverlässigen Kantenschutz, so daß ein Ausbrechen des Furniers im Bereich der Furnierkante unterbleibt. Das nach Durchführung diese Arbeitsgangs erhaltene Paneel 15 besteht demnach aus einem durch das Nutzenstück 1a gebildeten Mittelteil und einem hierauf aufgebrachten, einstückig über die seitlichen Flanken sich erstreckenden, durch das Furnierblatt 7 gebildeten Sichtfurnier, das anschließend noch eine Endbehandlung etwa durch Schleifen und Lackieren, erhalten kann.

Sofern die so hergestellten Paneele 15 für Nut- und Federverbindungen vorgesehen sind, werden die hierzu benötigten, seitlichen Nuten 16 nachträglich, d.h nach Durchführung des Furniervorgangs, eingeschnitten, wie in Figur 7 rechts angedeutet ist. Hierdurch ist sichergestellt, daß sich exakte Kanten im Bereich der seitlichen Nutbegrenzungen ergeben. Gleichzeitig wird hierdurch sichergestellt, daß auch die untere Nutwange sauber furniert ist, wie in Figur 7 bei 7a angedeutet ist. Wie weiter oben schon erwähnt wurde, ist das Nutzenstück 1a so aufgebaut, daß sich über seiner Breite im wesentlichen stehend verlaufende Jahresringe ergeben, so daß auch bei direkt auf dem Nutzenstück 1a aufgebrachtem Sichtfurnier eine Abzeichnung der Nutzenstruktur auf dem Furnier nicht zu befürchten ist und dementsprechend auf ein Sperrfurnier verzichtet werden kann.

## Patentansprüche

1. Verfahren zur Herstellung von beschichteten, insbesondere furnierten Tafelelementen, insbesondere Paneelen, mit wenigstens einer profilierten, vorzugsweise eine abgerundete Längskante aufweisenden Längseite,
**gekennzeichnet durch** folgende Verfahrensschritte:
**a;** als Ausgangsmaterial findet ein Rohling (1) Verwendung, dessen Breite B größer als die Breite b des fertigen Nutzenstücks (1a) ist,
**b;** in den Rohling (1) wird von seiner Sichtseite her für jede zu profilierende Längseite eine randparallele Randnut (2) eingearbeitet deren innere Flanke (6) entsprechend dem gewünschten Längsseitenprofil ausgebildet ist und die nach außen durch einen Randsteg (5) begrenzt ist,
**c;** auf den Rohling (1) wird ein jede Randnut (2) übergreifendes, auf jedem Randsteg (5) abgestütztes Beschichtungsblatt (7) aufgeleimt und aufgepresst,
**d;** jeder Randsteg (5) wird mit Abstand unterhalb des Beschichtungsblatts (7) von der Seite her durchtrennt,
**e;** der Rohling (1) wird randseitig bis auf Endmaß des Nutzenstücks (1a) abgearbeitet,
**f;** jeder randseitig überstehende Bereich des Beschichtungsblatts (7) wird an die zugeordnete Längsseite des Nutzenstücks (1a) angeleimt und angepresst und
**g;** der verbleibende Überstand des Beschichtungsblatts (7) über die Unterseite des Nutzenstücks (1a) wird entfernt.

2. Verfahren nach Anspruch 1, **dadurch gekennzeichnet, daß** die sichtseitige lichte Weite der Randnut (2) zumindest der Abwicklungslänge der zugeordneten Flanke des fertigen Nutzenstücks (1a) entspricht.

3. Verfahren nach einem der vorhergehenden Ansprüche, d**adurch gekennzeichnet, daß** beim Anpressen des Beschichtungsblatts (7) eine Beheizung, vorzugsweise mittels Infrarotbestrahlung, erfolgt.

4. Verfahren nach einem der vorhergehenden Ansprüche, **dadurch gekennzeichnet, daß** die Durchtrennung des Randstegs bzw. der Randstege (5) und die Abarbeitung des Rohlings (1) auf Nutzenmaß in zwei getrennten Arbeitsgängen erfolgt.

5. Verfahren nach einem der vorhergehenden Ansprüche, **dadurch gekennzeichnet, daß** beim Entfernen des unteren Überstands des Beschichtungsblatts (7) eine Phase von weniger als zehn Grad, vorzugsweise acht Grad, gebildet wird.

6. Verfahren nach einem der vorhergehenden Ansprüche, **dadurch gekennzeichnet, daß** ein Massivholz-Rohling (1) Verwendung findet, der aus miteinander verleimten Leisten (3) besteht, die so angeordnet sind, daß sich über der Rohlingsbreite im wesentlichen stehend verlaufende Jahresringe (4) ergeben.

7. Verfahren nach einem der vorhergehenden Ansprüche, **dadurch gekennzeichnet, daß** bei für Nut- und Federverbindungen bestimmten Elementen, vorzugsweise Paneelen, die hierfür benötigten Seitennuten (16) erst nach der Beschichtung eingeschnitten werden.

8. Verfahren nach einem der vorhergehenden Ansprüche, **dadurch gekennzeichnet, daß** für alle Verleimvorgänge ein Dispersionsleim Verwendung findet.

9. Verfahren nach einem der vorhergehenden Ansprüche, **dadurch gekennzeichnet, daß** das auf dem Nutzenstück (1a) aufgenommene Beschichtungsblatt (7) als Sichtfurnierblatt endbehandelt wird.

## Claims

1. A procedure for manufacturing coated, in particular veneered plate components, in particular panels, with at least one profiled longitudinal side, preferably exhibiting a rounded longitudinal edge, characterized by the following procedural steps:
a) a blank (1) whose width B exceeds the width b of the finished useful piece (1a) is used as the starting material;
b) the visible side of the blank (1) has incorporated into it a margin-parallel edge groove (2) whose internal flank (6) is formed based on the desired longitudinal side profile, and which is bordered to the outside by an edge web (5);
c) a coating sheet (7) overlapping each edge groove (2) and supported against each edge web (5) is glued and pressed on the blank (1);
d) each edge web (5) is divided along the side at a distance below the coating sheet (7);
e) the edge of the blank (1) is milled to the final dimensions of the useful piece (1a);
f) each area of the coating sheet (7) protruding over the edge is glued and pressed on the assigned longitudinal side of the useful piece (1a), and
g) the remainder of the coating sheet (7) protruding over the lower side of the useful piece (1a) is removed.

2. Procedure according to Claim 1, characterized by the fact that the visible inside diameter of the edge groove (2) corresponds at least to the developed length of the assigned flank of the finished useful piece (1a).

3. Procedure according to one of the preceding claims, characterized by the fact that heating, preferably via infrared radiation, takes place while pressing the coating sheet (7).

4. Procedure according to one of the preceding claims, characterized by the fact that the edge web or edge webs (5) are divided and the blank (1) is milled to the useful dimensions in two separate operations.

5. Procedure according to one of the preceding claims, characterized by the fact that a phase of less than ten degrees, preferably eight degrees, is formed while removing the lower remainder of the coating sheet (7).

6. Procedure according to one of the preceding claims, characterized by the fact that use is made of a massive wood blank (7) consisting of strips (3) glued together and arranged in such a way that essentially vertically running annual rings (4) come about over the width of the blank.

7. Procedure according to one of the preceding claims, characterized by the fact that the side grooves (16) required in components intended for groove and spring connections, preferably panels, are incorporated only after coating is complete.

8. Procedure according to one of the preceding claims, characterized by the fact that dispersion glue is used for all gluing operations.

9. Procedure according to one of the preceding claims, characterized by the fact that the coating sheet (7) accommodated on the useful piece (1a) is finished as a veneer sheet.

## Revendications

1. Procédé pour la fabrication d'éléments de plaques, notamment de panneaux recouverts, notamment par du placage, avec au moins un côté longitudinal profilé, de préférence présentant un bord longitudinal arrondi, **caractérisé par** les étapes de procédé suivantes :
**a ;** comme matériau de départ est utilisé une ébauche (1) dont la largeur B est plus grande que la largeur b de la pièce à découper finie (1a),
**b;** dans l'ébauche (1) est insérée, à partir de son côté visible pour chaque côté longitudinal à profiler, une rainure (2) parallèle au bord dont le flanc intérieur (6) est formé selon le profil du côté longitudinal souhaité et laquelle est délimitée vers l'extérieur par un talon de rebord (5),
**c ;** sur l'ébauche (1) est collée et appliquée par pression une feuille de recouvrement (7) appuyée sur chaque talon de rebord (5) et chevauchant chaque rainure de rebord (2),
**d ;** chaque talon de rebord (5) est sectionné par le côté, à distance en dessous de la feuille de revêtement (7),
**e ;** l'ébauche (1) est ciselée du côté de son bord jusqu'à la dimension finale de la pièce à découper (1a),
**f ;** chaque zone de la feuille de revêtement (7) dépassant sur le bord est collée et appliquée par pression au côté longitudinal correspondant de la pièce à découper (1a) et
**g ;** la partie dépassant restante de la feuille de revêtement (7) est éliminée à partir de la face du dessous de la pièce à découper (1a).

2. Procédé selon la revendication 1**, caractérisé en ce que** le diamètre intérieur du côté visible de la rainure du bord (2) correspond au moins à la longueur développée du flanc correspondant de la pièce à découper (1a) finie.

3. Procédé selon l'une des revendications précédentes, **caractérisé en ce que**, lors de l'application de pression sur la feuille de revêtement (7), un chauffage est mis en oeuvre, de préférence au moyen de rayons infrarouges.

4. Procédé selon l'une des revendications précédentes, **caractérisé en ce que** le sectionnement du talon de rebord, respectivement des talons de rebord (5) et le ciselage de l'ébauche (1) aux dimensions de la pièce à découper représentent deux opérations séparées.

5. Procédé selon l'une des revendications précédentes, **caractérisé en ce que**, lors de l'enlèvement de la partie dépassant restante de la feuille de revêtement (7) est formé un chanfrein de moins de dix degrés, de préférence de huit degrés.

6. Procédé selon l'une des revendications précédentes, **caractérisé en ce qu'**une ébauche (1) en bois massif est utilisée, qui se compose de listels collés ensemble (3) qui sont disposés de telle manière que sur la largeur de l'ébauche se produisent des cernes (4) qui se situent essentiellement en position debout.

7. Procédé selon l'une des revendications précédentes, **caractérisé en ce que**, pour les éléments destinés aux assemblages par rainure et languette, de préférence des panneaux, les rainures latérales (16) nécessaires ne sont coupées qu'après l'application du revêtement.

8. Procédé selon l'une des revendications précédentes, **caractérisé en ce que**, pour toutes les opérations de collage, est utilisée une colle en dispersion.

9. Procédé selon l'une des revendications précédentes, **caractérisé en ce que** la feuille de revêtement (7) appliquée sur la pièce à découper (1a) est traitée en finition comme une feuille de placage visible.
